# EUROPEAN PATENT SPECIFICATION

(11) **EP 3 032 626 B1**
(45) Date of publication and mention of the grant of the patent: **09.08.2017**
(21) Application number: 14834289.2
(22) Date of filing: 17.06.2014
(51) Int. Cl.: H01M 8/0273, H01M 8/1004, H01M 8/1018, H01M 8/0297

(54) **MEMBRANE ELECTRODE ASSEMBLY WITH FRAME, FUEL CELL SINGLE CELL, AND FUEL CELL STACK**
MEMBRANELEKTRODENANORDNUNG MIT RAHMEN, BRENNSTOFFZELLENEINZELZELLE UND BRENNSTOFFZELLENSTAPEL
ENSEMBLE D'ÉLECTRODES MEMBRANAIRE, CELLULE INDIVIDUELLE DE PILE À COMBUSTIBLE ET EMPILEMENT DE PILE À COMBUSTIBLE

(30) Priority: 08.08.2013 JP 2013165364
(43) Date of publication of application: 15.06.2016
(73) Proprietor: NISSAN MOTOR CO., LTD., Yokohama-shi, Kanagawa 221-0023 (JP)
(72) Inventor: KAGEYAMA, Kazuhiro, Yokohama-shi Kanagawa 221-0023 (JP); SUGINO, Manabu, Yokohama-shi Kanagawa 221-0023 (JP); YASUTAKE, Akira, Yokohama-shi Kanagawa 221-0023 (JP)
(74) Representative: Grünecker Patent- und Rechtsanwälte PartG mbB
(86) International application number: PCT/JP2014/066003
(87) International publication number: WO 2015/019714

(56) References cited:
- JP-A- H05 234 606
- JP-A- 2006 331 783
- JP-A- 2007 516 559
- JP-A- 2008 130 432
- JP-A- 2009 135 068
- JP-A- 2013 131 417

## Description

### TECHNICAL FIELD

The present invention relates to a membrane electrode assembly with frame used for polymer electrolyte fuel cells and to a fuel cell single cell and a fuel cell stack using the membrane electrode assembly with frame.

### BACKGROUND ART

One of membrane electrode assemblies of this type is described in Patent Document 1 titled "method for producing electrolyte membrane / electrode structure with resin frame for fuel cell". In the electrolyte membrane / electrode structure with resin frame of Patent Document 1, an anode electrode is removed in the peripheral portion so that the electrolyte membrane is exposed. In the inner periphery of a resin frame member, a thin inner peripheral protrusion having the same thickness as the anode electrode and a resin protrusion that protrudes in the thickness direction on the side facing the cathode electrode are provided. This electrolyte membrane / electrode structure with resin frame is produced by joining the inner peripheral protrusion of the resin frame member to the exposed electrolyte membrane by an adhesive layer, and thereafter melting the resin protrusion by heat to impregnate it in the gas diffusion layer of the cathode electrode so that a resin impregnated portion is formed in the gas diffusion layer. A further example of a membrane electrode assembly with frame is disclosed in Patent Document 2.

### CITATION LIST

### Patent Literature

Patent Document 1: JP 2013-131417A
Patent Document 2: JP 2008-130432A

### SUMMARY OF INVENTION

### Technical Problem

However, a problem with such conventional membrane electrode assemblies with frame as described above (the electrolyte membrane / electrode structure with resin frame for fuel cell) is that since the thin inner peripheral protrusion of the frame (resin frame member) is joined to the membrane electrode assembly (electrolyte membrane / electrode structure), the frame is distorted in the thickness direction, for example, when a pressure difference is caused between anode gas and cathode gas, and repetition of such distortion may cause breakage of the inner peripheral protrusion of the frame. Accordingly, it has been required to solve the problem.

The present invention was made in view of the above-described problem with the prior art, and an object thereof is to provide a membrane electrode assembly with frame that has sufficient strength against a force acting in the thickness direction and thereby can prevent the frame from being damaged.

### Solution to Problem

The present invention is defined by the subject matter of independent claim 1. Further embodiments are defined in the dependent claims. The membrane electrode assembly with frame of the present invention includes a membrane electrode assembly in which an electrolyte membrane is held between a pair of electrode layers, and a resin frame disposed around the membrane electrode assembly. The frame includes an opening in which the membrane electrode assembly is disposed, a step that is formed along the edge of the opening and has a height corresponding to the frame, and an inner peripheral portion that is deviated to one side of the frame due to the step and extends into the opening. The membrane electrode assembly with frame is configured such that the outer peripheral portion of the membrane electrode assembly is joined to the inner peripheral portion on the side opposite the deviation. This configuration serves as means for solving the problem with the prior art.

### Advantageous Effects of Invention

In the membrane electrode assembly with frame of the present invention with the above-described configuration, the frame is configured such that the inner peripheral portion, which is joined to the membrane electrode assembly, has a thickness approximately equal to the thickness of the body, while the step has a larger thickness. This ensures adequate strength against a force acting in the thickness direction, and therefore prevents the frame from being damaged.

### BRIEF DESCRIPTION OF DRAWINGS

FIG. 1 are (A) a perspective view of a fuel cell stack according to the present invention, (B) an exploded perspective view thereof, and (C) a perspective view of cell modules and a sealing plate.
FIG. 2 is an exploded perspective view of a fuel cell single cell of the fuel cell stack of FIG. 1.
FIG. 3 are (A) a cross sectional view of the main part of a membrane electrode assembly with frame according to a first embodiment of the present invention, and (B) an enlarged cross sectional view of an area around a step, and a graph illustrating the ratio of the stress that is generated when a differential pressure is applied.
FIG. 4 are (A) a perspective view of the frame and the membrane electrode assembly from the cathode side, and (B) a perspective view thereof from the anode side.
FIG. 5 are (A) a trihedral view of a frame according to a second embodiment, (B) a trihedral view of a frame according to a third embodiment, and (C) a trihedral view of a frame according to a fourth embodiment.
FIG. 6 illustrates a membrane electrode assembly with frame according to a fifth embodiment of the present invention, in which (A) is a cross sectional view of the main part of the membrane electrode assembly with frame, and (B) to (D) are, respectively, cross sectional views of three examples of the joining portion.
FIG. 7 are (A) a cross sectional view of a fuel cell single cell according to a sixth embodiment of the present invention, and (B) a cross sectional view of a fuel cell single cell according to a seventh embodiment.

### DESCRIPTION OF EMBODIMENTS

### (First Embodiment)

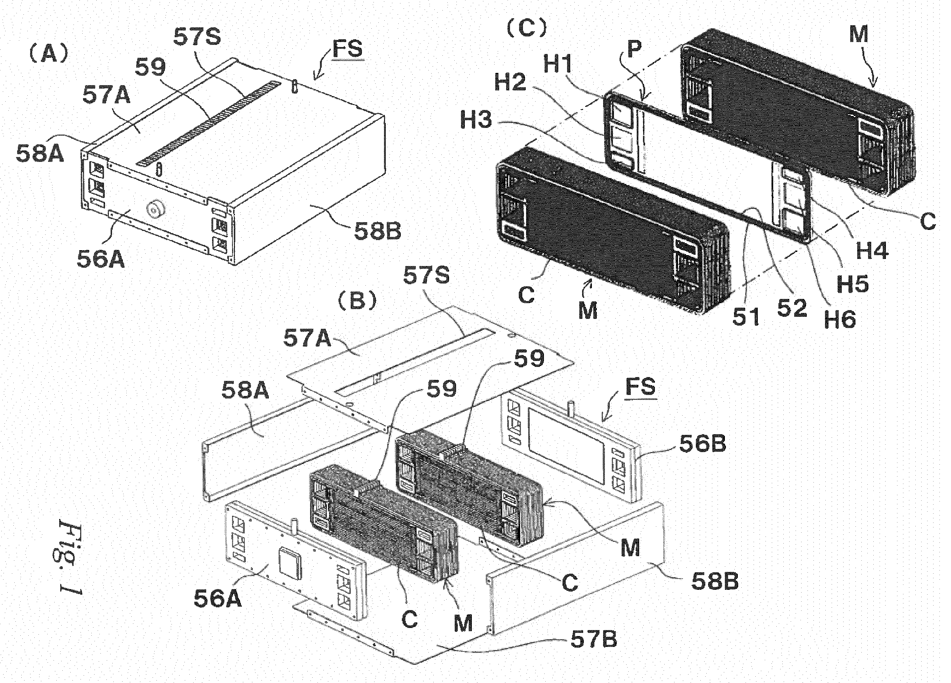

As particularly illustrated in FIG. 1 (B) and (C), a fuel cell stack FS of FIG. 1 includes two or more cell modules M each including an integrally stacked plurality of single cells C, and a sealing plate P interposed between the cell modules M. The illustrated single cells C and the sealing plate P have a rectangular plate shape with approximately the same length and width. While two cell modules M and one sealing plate P are depicted in FIG. 1 (C), more cell modules M and sealing plates P are stacked in practice.

The fuel cell stack FS further includes end plates 56A, 56B that are disposed on the respective ends of the stacked cell modules M in the stacking direction, fastening plates 57A, 57B that are disposed on stacked long side edges (upper and lower faces in FIG. 1) of the single cells C, and reinforcing plates 58A, 58B that are disposed on stacked short side edges. The fastening plates 57A, 57B and the reinforcing plates 58A, 58B have a size corresponding to the overall length in the stacking direction of a stack A that is composed of the cell modules M and the sealing plate P. Each of them is coupled to both of the end plates 56A, 56B by means of bolts (not shown).

As described above, the fuel cell stack FS has a case-integrated structure as illustrated in FIG. 1 (A), in which the cell modules M and the sealing plate P are restrained and pressed in the stacking direction so that a contact surface pressure is applied to each of the single cells C. With this configuration, the gas sealing property and the electrical conductivity are maintained at a high level. Each of the single cells C in the figure has an external terminal 59 for measuring the voltage at the same position on a long side. Corresponding to the terminals, the fastening plate 57A, which is the upper one in FIG. 1, has a slit 57S in which the external terminals 59 of the single cells C are inserted, so that a suitable number of separate connectors (not shown) can be connected to the external terminals 59.

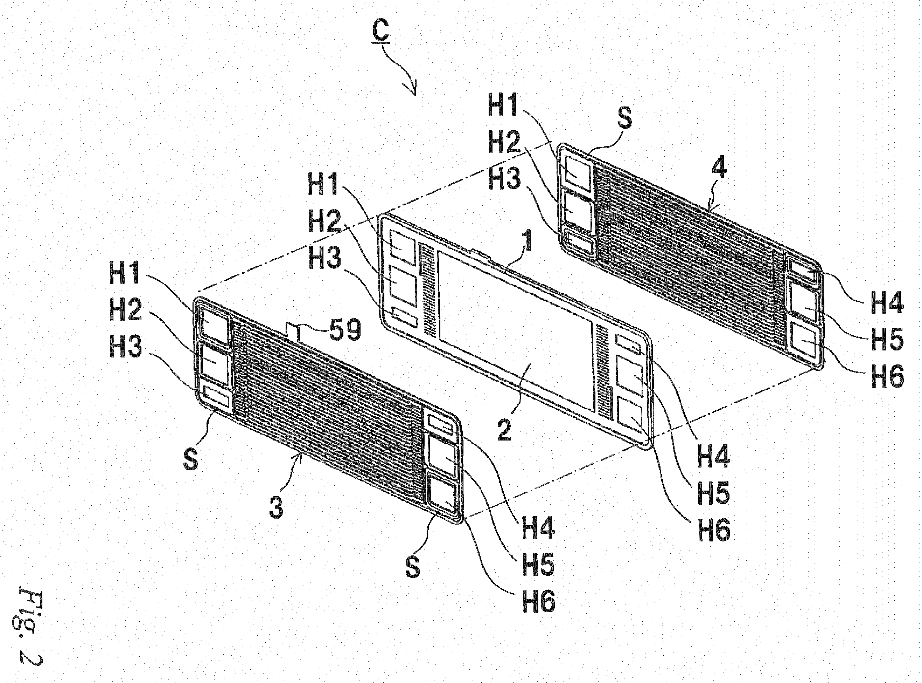

As illustrated in FIG. 2, each of the single cells C includes a membrane electrode assembly with frame 2, and a pair of (an anode side and a cathode side) separators 3, 4 that sandwich the membrane electrode assembly 2. The membrane electrode assembly 2 has a structure, in which an electrolyte membrane is held between a pair of electrode layers, and a resin frame 1 is disposed around the structure. The frame 1 and the separators 3, 4 have a rectangular plate shape with approximately the same length and width. The joining of the frame 1 to the membrane electrode assembly 2 is described in detail below.

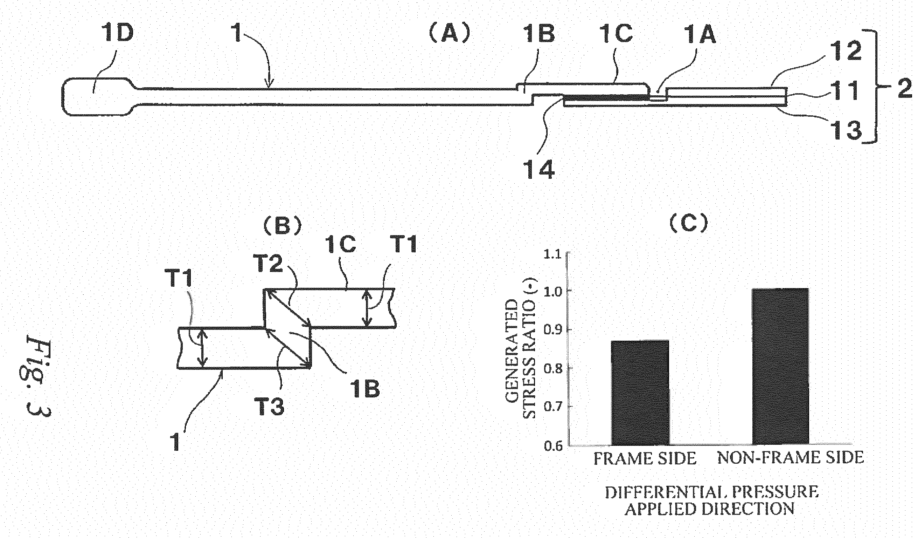

As partly illustrated in FIG. 3 (A), the membrane electrode assembly 2, which is generally called an MEA, includes an electrolyte membrane 11 of a solid polymer that is held between a fuel electrode layer (anode) 12 and an air electrode layer (cathode) 13. Although not shown in the figure, the fuel electrode 11 and the air electrode 13 each includes a catalyst layer and a gas diffusion layer of a porous material, which are arranged in the written order from the side facing the membrane electrode assembly 2. When anode gas (hydrogen) and cathode gas (air) are respectively supplied to the fuel electrode 12 and the air electrode 13, the membrane electrode assembly 2 generates electric power as a result of electrochemical reaction.

The separators 3, 4 are metal plates in which one plate has reversed faces to those of the other plate. For example, the separators 3, 4 are made of stainless steel and may be formed in any suitable shape by press working. In the center part facing the membrane electrode assembly 2, the separators 3,4 have a corrugated transverse cross section. The corrugation continues in the longitudinal direction as illustrated in the figure. On the side facing the membrane electrode assembly 2, each of the separators 3, 4 is in contact with the membrane electrode assembly 2 at the apexes of the corrugation so that the valleys of the corrugation define channels for the anode gas or the cathode gas.

The frame 1 of the membrane electrode assembly 2 and each of separators 3, 4 has manifold holes H1 to H3, H4 to H6 such that three manifold holes are disposed along the respective short side ends. The manifold holes H1 to H3, which are illustrated to the left in FIG. 1 and FIG. 2, are configured to supply the cathode gas (H1), to supply cooling fluid (H2) and to discharge the anode gas (H3). They are communicated with corresponding holes in the stacking direction to form respective channels. The manifold holes H4 to H6, which are illustrated to the right in FIG. 1 and FIG. 2, are configured to supply the anode gas (H4), to discharge the cooling fluid (H5) and to discharge cathode gas (H6). They are communicated with corresponding holes in the stacking direction to form respective channels. The positional relationship may be fully or partly inversed in respect of supply and discharge.

Sealing members S are continuously disposed along the peripheral portion of the frame 1 and the separators 3, 4 and around the manifold holes H1 to H6. The sealing members S, which also serve as adhesive, airtightly join the frame 1 and the membrane electrode assembly 2 to the separators 3, 4. The sealing members S disposed around the manifold holes H1 to H6 maintain the airtightness of the respective manifolds, while they have an opening at a suitable location for supplying fluid corresponding to respective interlayers.

A predetermined number of the above-described single cells C are stacked to form the cell module M. Between adjacent single cells C, a channel for the cooling fluid is formed. Also between adjacent cell modules M, a channel for the cooling fluid is formed. Accordingly, the sealing plate P is disposed between the cell modules M, i.e. in the channel for the cooling fluid.

The sealing plate P is constituted by an electrically conducive molded single metal plate having approximately the same rectangular shape and approximately the same size as the single cells C in a plan view. As with the single cells C, manifold holes H1 to H6 are formed along the short sides. On the sealing plate P, sealing members are respectively provided around the manifold holes H1 to H6, and an outer sealing member 51 and an inner sealing member 52 are provided in parallel all over the peripheral part. The outer sealing member 51 prevents infiltration of rain water and the like from the outside, while the inner sealing member 52 prevents leak of the cooling fluid that flows between the cell modules M.

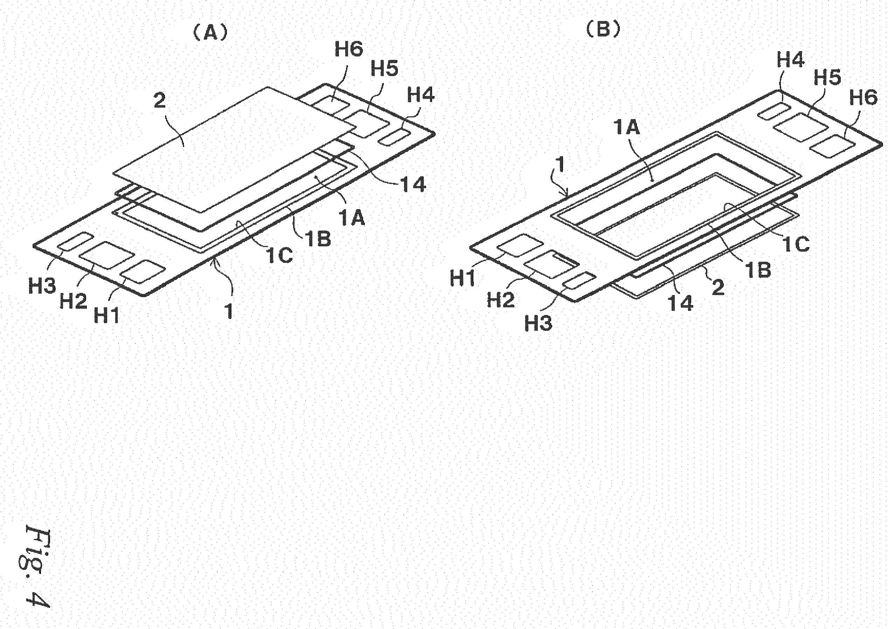

As described above, the membrane electrode assembly with frame 2 includes the resin frame 1 in the peripheral part. As illustrated in FIG. 4, the frame 1 includes a center rectangular opening 1A, a step 1 B and an inner peripheral portion 1C and further includes a thick outer peripheral portion 1D. The opening 1A is the portion in which the membrane electrode assembly 2 is disposed. The step 1B is formed along the periphery of the opening 1A and has a height corresponding to the thickness of the frame 1. The inner peripheral portion I C, which continues to the step 1B, is deviated to one side of the frame 1 due to the step 1B and extends into the opening 1A.

As illustrated in FIG. 3 (B), the step I B has a height corresponding to the thickness T1 of the frame 1. Accordingly, the inner peripheral portion 1C, which continues from the step 1B, also has the same thickness T1 as the thickness of the frame body. In the step 1B, the distance T2 from the outer corner on the deviated side (upper side in FIG. 3) to the inner corner on the opposite side and the distance T3 from the inner corner on the deviated side to the outer corner on the opposite side are both greater than the thickness T1 of the frame 1. The step may have either crank shape as illustrated in FIG. 3 or curved shape that continuously connects the body and the inner peripheral portion 1C to each other as described below in 5.

Corresponding to the frame 1, the membrane electrode assembly 2 has the outer peripheral portion in which the fuel electrode layer 12 is removed so that one side of the electrolyte membrane 11 is exposed as illustrated in FIG. 3 (A). The part of the electrolyte membrane 11 in the outer peripheral portion of the membrane electrode assembly 2 is joined to the other side (lower face in FIG. 3) of the inner peripheral portion 1C of the frame 1 from the deviated side. They are joined to each other by adhesive or sticking agent, which forms a joining layer 14 between the inner peripheral portion 1C and the electrolyte membrane 11. In this respect, in the membrane electrode assembly with frame 2 of FIG. 3 (A), the electrode layer that is located on the same side as the deviated side of the inner peripheral portion 1C corresponds to the fuel electrode layer 12.

As illustrated in FIG. 3 (A), a groove-like gap is formed between the frame 1 and the membrane electrode assembly 2. This gap is to allow the dimensional error of the inner peripheral portion 1C of the frame 1 and the outer peripheral portion of membrane electrode assembly 2. However, it is not essential. Further, the joining layer 14 is depicted like a frame in FIG. 4. However, in practice, it is applied on the inner peripheral portion 1C by screen printing, application or the like.

In the membrane electrode assembly with frame 2 with the above-described configuration, the frame 1 is configured such that the thickness T1 at the inner peripheral portion 1C, to which the membrane electrode assembly 2 is joined, is approximately equal to the thickness of the body, while the thickness at the step 1B is greater. This ensures sufficient strength against a force acting in the thickness direction, and therefore prevents the frame 1 from being damaged.

The frame 1 is continuous from the body to the thick step 1B to the inner peripheral portion 1C. This improves the moldability (resin fluidity), and the quality can be therefore improved. Furthermore, the membrane electrode assembly with frame 2 can be assembled only by joining the separately-molded frame 1. Such simple structure can decrease the cycle time per unit of the production. Accordingly, cost reduction and good mass productivity are achieved.

Accordingly, simple structure, cost reduction, improved durability and improved productivity can be achieved also in the single cell C with the membrane electrode assembly with frame 2, and the cell module M and the fuel cell stack FS that are composed of the stacked single cells C.

In the fuel cell stack FS using the membrane electrode assemblies with frame 2, the supply pressure of the anode gas may be changed in a pulse form in order to remove water produced on the fuel electrode. In this case, the pressure at the anode side is increased with an increase of the supply pressure of the anode gas, and the frame 1 is distorted towards the cathode side due to the resulting differential pressure between the anode side and the cathode side. In this way, the frame 1 is repeatedly deformed according to the changing supply pressure.

To address this, in the membrane electrode assembly with frame 2, the fuel electrode layer 12 is disposed on the same side as the deviated side of the inner peripheral portion 1C of the frame 1. In other words, the inner peripheral portion 1C is deviated to the anode side to which a high pressure is applied. Accordingly, in the membrane electrode assembly with frame 2, when the frame 1 is distorted toward the cathode side, the cathode-side part of the step 1 B is subjected to a compressive force. Therefore, the resultant generated stress, which is denoted as "frame side" in FIG. 3 (C), is relatively low compared to the stress caused by a differential pressure from the opposite side (cathode side). As a result, the membrane electrode assembly with frame 2 is highly durable against deformation due to pressure difference between the anode gas and the cathode gas.

### (Second to Fourth Embodiments)

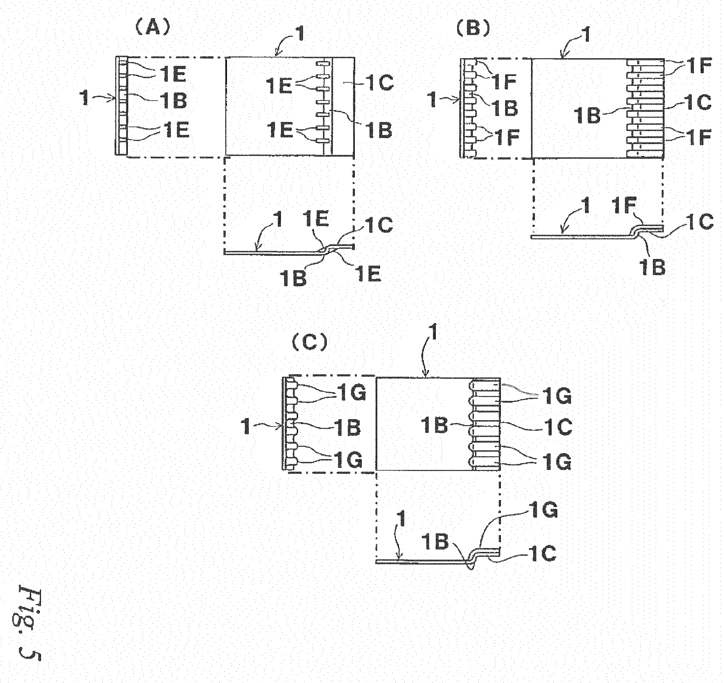

FIG. 5 illustrate frames of membrane electrode assemblies with frame according to other embodiments of the present invention, in which a reinforcing portion is provided on at least one side of a step 1B.

In FIG. 5 (A), the frame 1 according to the second embodiment includes lib reinforcing portions 1E on both sides of a step 1 B, which are arranged at the predetermined intervals in the continuing direction of the step 1B.

In FIG. 5 (B), the frame 1 according to the third embodiment includes tenon-like reinforcing portions 1F on the deviated side of a step 1, which are arranged at the predetermined intervals in the continuing direction of the step 1B. The reinforcing portions 1F are provided in the area ranging from the step to an inner peripheral portion 1C.

In FIG. 5 (C), the frame 1 according to a fourth embodiment includes tenon-like reinforcing portions 1G on the deviated side of the step 1 as in FIG. 5 (B), which are arranged at the predetermined intervals in the continuing direction of the step 1B. The reinforcing portions 1G are provided in the area ranging from the step to the inner peripheral portion 1C. The upper ends thereof are formed in a curved shape, and the boundary between the step 1B and the inner peripheral portion 1C is rounded so that a corrugation is formed as a whole.

The frame 1 with the above-described reinforcing portions 1E, 1F or 1G exhibits higher strength in the step 1B and the inner peripheral portion 1C. Therefore, further improved durability and the like can be achieved. In the above-described embodiments, the reinforcing portions 1E, 1F or 1G are arranged at the predetermined intervals. However, they may be continuously disposed instead. For example, in the membrane electrode assembly with frame 2 of FIG. 2, a plurality of reinforcing portions are formed along the short sides at the predetermined intervals so that the gaps between adjacent reinforcing portions can serve as gas channels to allow a flow of the anode gas or the cathode gas. Further, a plurality of reinforcing portions or continuous reinforcing portions are formed along the long sides so as to prevent a deviated flow of the anode gas or the cathode gas.

### (Fifth Embodiment)

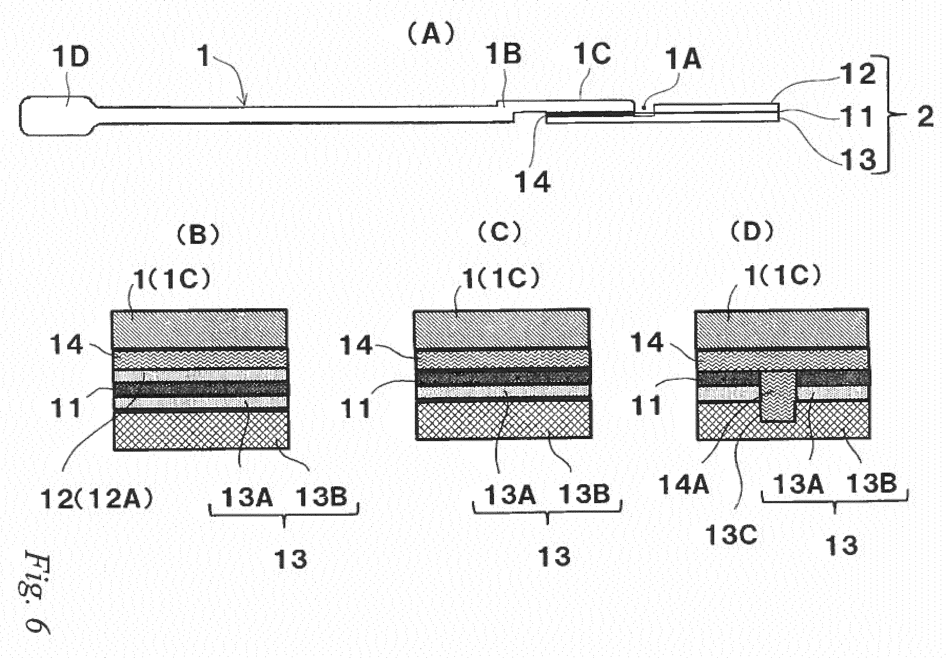

FIG. 6 illustrates a membrane electrode assembly with frame according to a fifth embodiment of the present invention. In FIG. 6 (B) to (D), a fuel electrode layer 12 of the membrane electrode assembly 2 includes a catalyst layer 12A and a gas diffusion layer (not shown) that are arranged in the written order from an electrolyte membrane 11. Similarly, an air electrode layer 13 of the membrane electrode assembly 2 includes a catalyst layer 13A and a gas diffusion layer 13B that are arranged in the written order from the electrolyte membrane 11.

In an example of FIG. 6 (B), the membrane electrode assembly 2 has an outer peripheral portion in which the fuel electrode layer 12, which is one of the electrode layers, docs not have the gas diffusion layer so that the catalyst layer 12A is exposed. Then, between an inner peripheral portion 1C of the frame 1 and the catalyst layer 12A of the fuel electrode layer 12, a joining layer 14 of adhesive or sticking agent is provided. In the membrane electrode assembly with frame 2, joining the inner peripheral portion 1C to the catalyst layer 12A can provide higher joining strength compared to joining the inner peripheral portion 1C to the gas diffusion layer of a porous material.

In an example of FIG. 6 (C), the membrane electrode assembly 2 has an outer peripheral portion in which one side of an electrolyte membrane 11 facing the fuel electrode layer 12, which is one of the electrode layers, is exposed. Then, between an inner peripheral portion 1C of the frame 1 and the exposed side of the electrolyte membrane 11, a joining layer 14 of adhesive or sticking agent is provided. In this membrane electrode assembly with frame 2, the fuel electrode layer 12 is omitted in the outer peripheral portion, which is out of the power generating area. This can reduce the catalyst layer 12A containing an expensive catalyst to the minimum size. Therefore, further cost reduction can be achieved.

In the example of FIG. 6 (D), as with the example of FIG. 6 (C), the membrane electrode assembly 2 has an outer peripheral portion in which one side of an electrolyte membrane 11 facing the fuel electrode layer 12 is exposed, and the joining layer 14 is provided between an inner peripheral portion 1C of the frame 1 and the exposed side of the electrolyte membrane 11. Further, the membrane electrode assembly 2 has a communication hole 13C in the outer peripheral portion through the electrolyte membrane 11 to the other electrode layer, the air electrode layer 13. The communication hole 13C is open in the surface of the electrolyte membrane 11 and has a bottom in the middle of the gas diffusion layer 13B of the air electrode layer 13. The communication hole 13C is filled with the material of the joining layer 14 so that an anchor 14A is formed integrally with the joining layer 14.

As with the example of FIG. 6 (C), in the membrane electrode assembly with frame 2, omitting the fuel electrode layer 12 in the outer peripheral portion enables further cost reduction. Further, in the membrane electrode assembly 2, even when the electrolyte membrane 11 is made of a material with poor bonding capacity such as a fluorine-based material, the anchor 14A engaged with the air electrode layer 13 can increase the adhesiveness between the electrolyte membrane 11 and the joining layer 14 and eventually increase the adhesiveness between the inner peripheral portion 1C of the frame 1 and the electrolyte membrane 11.

### (Sixth and Seventh Embodiments)

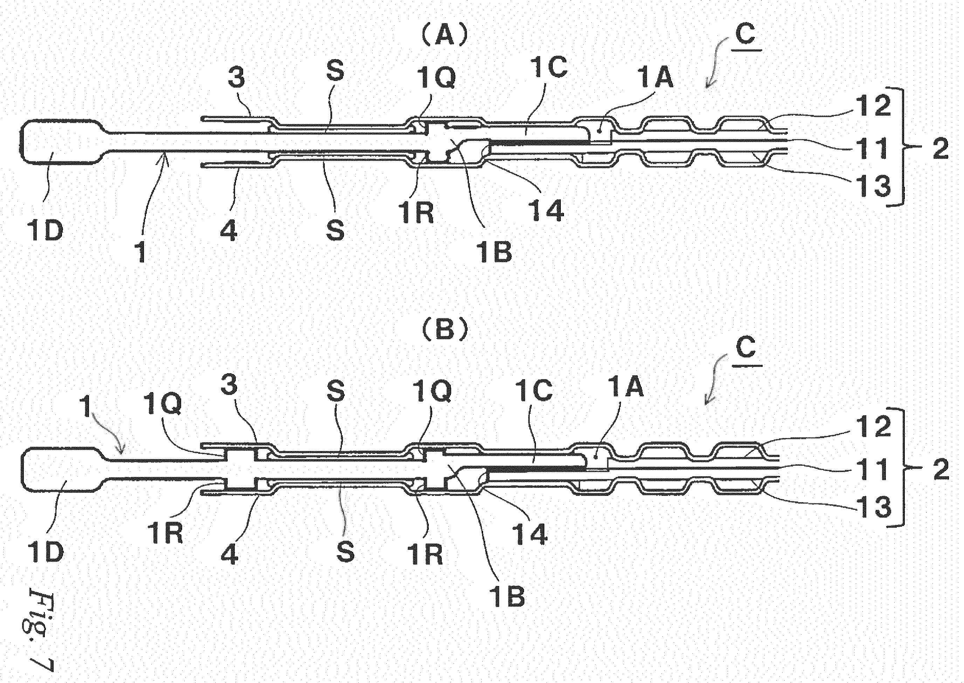

FIG. 7 illustrates fuel cell single cells with a membrane electrode assembly with frame 2 according to two other embodiments of the present invention, which are cross sectional views of a part corresponding to a long side of the single cell C in FIG. 2. The same reference signs are denoted to the same components as those of the previous embodiments, and the detailed descriptions thereof are omitted.

Each of the single cells C of FIG. 7 (A) and (B) includes a membrane electrode assembly with frame 2 and a pair of separators 3, 4 that sandwich the membrane electrode assembly 2. The pair of separators 3, 4 corresponds to anode and cathode separators. As described in the previous embodiments, one separator has reversed faces with a suitable shape to those of the other separator so as to allow anode gas or cathode gas to flow in the direction parallel to the long sides (the direction normal to the sheet in FIG. 7).

Further, each of the single cells C includes sealing members S that are disposed between the frame 1 and the separators 3, 4 in a part outside the step 1B (left side in FIG. 7) so that they are airtightly joined to each other. The sealing members S, which are similar to the scaling member S of the first embodiment, are elastic. Further, in each of the single cells C, the separators 3, 4 sandwich the joining portion of the inner peripheral portion 1C of the frame 1 to the outer peripheral portion of the membrane electrode assembly 2 so that the joining between them is maintained in a good condition.

The single cell C of FIG. 7 (A) according to a sixth embodiment includes protrusions 1Q, 1R that are disposed on the respective sides of the frame 1 at a part inside the sealing members S and abut the cell inner surfaces of the separators 3,4 respectively. As with the reinforcing portions in FIG. 5, the plurality of protrusions 1Q, I R may be formed at the predetermined intervals along the short sides and the long sides of the membrane electrode assembly 2, or the protrusions 1Q, 1R may be formed continuously.

In the single cell C with the above-described configuration, the frame 1 is further reinforced by the protrusions 1Q, 1R in addition to the improvement in strength by the step 1B. Furthermore, the protrusions 1Q, I R that abut the separators 3, 4, can transfer a load, which is applied at the stacking, in the stacking direction well.

Further, in the single cell C, the protrusions 1Q, 1R of the frame 1 that abut the separators 3, 4 can maintain the thickness of the sealing members S at a constant value. Accordingly, the variability in sealing function among the stacked single cells C can be reduced. Furthermore, in the single cell C, the protrusions 1Q, 1R along the long sides of the membrane electrode assembly 2, i.e. in the portions along the flowing direction of the anode gas or cathode gas, serve as obstacles against a deviated flow so as to promote the flow of the gases to a power generating area. This contributes to improving the power generating efficiency.

The single cell C of FIG. 7 (B) according to a seventh embodiment includes protrusions 1Q, 1R that are disposed on the respective sides of the frame 1 in both parts inside and outside the sealing member S to abut the cell inner surfaces of separators 3,4 respectively. As with the reinforcing portions in FIG. 5, a plurality of protrusions 1Q, 1 R may be formed at the predetermined intervals along the short sides and the long sides of the membrane electrode assembly 2, or the protrusions 1Q, 1R may be formed continuously.

Also in the single cell C with the above-described configuration, the frame 1 can be reinforced by the protrusions 1Q, 1R in addition to the improvement in strength by a step 1B. Further, the protrusions 1Q, 1R can transfer a load, which is applied at stacking, in the stacking direction well.

Furthermore, since the single cell C includes the protrusions 1Q, 1R in both parts outside and inside the sealing members S, their function of maintaining the thickness of the sealing members S at a constant value is more reliable. Therefore, they can have the function of reducing the variability of the sealing function among the stacked single cells C and the function of preventing a deviated flow along the long sides of the membrane electrode assembly 2.

### REFERENCE SIGNS LIST

- 1: Frame
- 1A: Opening
- 1B: Step
- 1C: Inner peripheral portion
- 1E, 1F, 1G: Reinforcing portion
- 1Q, 1R: Protrusion
- 2: Membrane electrode assembly
- 3,4: Separator
- 11: Electrolyte membrane
- 12: Fuel electrode layer (electrode layer)
- 12A: Catalyst layer of fuel electrode layer
- 13: Air electrode layer (electrode layer)
- 13C: Communication hole
- 14: Joining layer
- 14A: Anchor
- C: Fuel cell single cell
- FS: Fuel cell stack
- S: Sealing member

## Claims

1. A membrane electrode assembly (2) with frame (1), comprising:
a membrane electrode assembly (2) in which an electrolyte membrane (11) is held between a pair of electrode layers (12, 13); and
a resin frame (1) disposed around the membrane electrode assembly (2),
wherein the frame (1) comprises an opening (1A) in which the membrane electrode assembly (2) is disposed, a step (1 B) that is formed along an edge of the opening (1A) and has a height corresponding to a thickness of the frame (1), and an inner peripheral portion (1C) that is deviated to one side of the frame (1) due to the step (1 B) and extends into the opening (1A),
an outer peripheral portion of the membrane electrode assembly (2) is joined to the inner peripheral portion (1 C) on a side opposite a deviated side,
**characterized in that**
the frame (1) has a thickness that is greater at the step (1B) or includes a reinforcing portion (1 E, 1 F, 1 G) provided on at least one side of the step (1 B).

2. The membrane electrode assembly (2) with frame (1) according to claim 1, wherein an electrode layer (12, 13) that is located at a same side as the deviated side of the inner peripheral portion (1 C) is a fuel electrode layer (12).

3. The membrane electrode assembly (2) with frame (1) according to claim 1 or 2,
wherein a catalyst layer (12A) of one of the pair of electrode layers (12, 13) is exposed in the outer peripheral portion of the membrane electrode assembly (2), and
the membrane electrode assembly (2) with frame (1) further comprises a joining layer (14) of an adhesive or a sticking agent between the inner peripheral portion (1 C) of the frame (1) and the catalyst layer (12A) of one of the electrode layers (12, 13).

4. The membrane electrode assembly (2) with frame (1) according to claim 1 or 2,
wherein a side of the electrolyte membrane (11) facing one of the pair of electrode layers (12, 13) is exposed in the outer peripheral portion of the membrane electrode assembly (2), and
the membrane electrode assembly (2) with frame (1) further comprises a joining layer (14) of an adhesive or a sticking agent between the inner peripheral portion (1 C) of the frame (1) and the exposed side of the electrolyte membrane (11).

5. The membrane electrode assembly (2) with frame (1) according to claim 4,
wherein the outer peripheral portion of the membrane electrode assembly (2) comprises an communication hole (13C) through the electrolyte membrane (11) to the other of the pair of electrode layers (12, 13), and
an anchor (14A) of a same material as the joining layer (14) is formed in the communication hole (13C) integrally with the joining layer (14).

6. A fuel cell single cell (C), comprising: the membrane electrode assembly (2) with frame (1) according to any one of claims 1 to 5; and a pair of separators (3, 4) that sandwich the membrane electrode assembly (2) with frame (1).

7. The fuel cell single cell (C) according to claim 6, further comprising:
a sealing member (S) that is disposed between the frame (1) and each of the pair of separators (3, 4) in a part outside the step (1B) so as to airtightly join the frame (1) to each of the pair of separators (3, 4),
wherein the frame (1) comprises protrusions (1Q, 1R) that are disposed in a part inside the sealing member (11) to abut each of the pair of separators (3, 4).

8. The fuel cell single cell (C) according to claim 7, wherein the frame (1) further comprises protrusions (1Q, 1 R) that are disposed in a part outside the sealing member (11) to abut each of the pair of separators (3, 4).

9. A fuel cell stack (FS), comprising a stacked plurality of the fuel cell single cells (C) according to any one of claims 6 to 8.

## Patentansprüche

1. Membranelektroden-Anordnung (2) mit Rahmen (1), die umfasst:
eine Membranelektroden-Anordnung (2), in der eine Elektrolytmembran (11) zwischen einem Paar Elektroden-Schichten (12, 13) gehalten wird; und
einen Kunststoff-Rahmen (1), der um die Membranelektroden-Anordnung (2) herum angeordnet ist,
wobei der Rahmen (1) eine Öffnung (1A), in der die Membranelektroden-Anordnung (2) angeordnet ist, einen Absatz (1 B), der an einem Rand der Öffnung (1A) angeordnet ist und eine Höhe hat, die einer Dicke des Rahmens (1) entspricht, sowie einen Innenumfangsabschnitt (1 C) umfasst, der aufgrund des Absatzes (1 B) zu einer Seite des Rahmens (1) hin verschoben ist und sich in die Öffnung (1A) hinein erstreckt, und
ein Außenumfangsabschnitt der Membranelektroden-Anordnung (2) mit dem Innenumfangsabschnitt (1 C) an einer Seite verbunden ist, die einer verschobenen Seite gegenüberliegt,
**dadurch gekennzeichnet, dass**
der Rahmen (1) eine Dicke hat, die an dem Absatz (1B) größer ist, oder einen verstärkenden Abschnitt (1 E, 1 F, 1 G) enthält, der sich an wenigstens einer Seite des Absatzes (1 B) befindet.

2. Membranelektroden-Anordnung (2) mit Rahmen (1) nach Anspruch 1, wobei eine Elektroden-Schicht (12, 13), die sich an ein und derselben Seite befindet wie die verschobene Seite des Innenumfangsabschnitts (1 C), eine Brennstoffelektroden-Schicht (12) ist.

3. Membranelektroden-Anordnung (2) mit Rahmen (1) nach Anspruch 1 oder 2,
wobei eine Katalysator-Schicht (12A) einer der paarigen Elektroden-Schichten (12, 13) an dem Außenumfangsabschnitt der Membranelektroden-Anordnung (2) freiliegt, und
die Membranelektroden-Anordnung (2) mit Rahmen (1) des Weiteren eine VerbindungsSchicht (14) aus einem Klebstoff oder einem Haftmittel zwischen dem Innenumfangsabschnitt (1C) des Rahmens (1) und der Katalysator-Schicht (12A) einer der Elektroden-Schichten (12, 13) umfasst.

4. Membranelektroden-Anordnung (2) mit Rahmen (1) nach Anspruch 1 oder 2,
wobei eine Seite der Elektrolytmembran (11), die einer der paarigen Elektroden-Schichten (12, 13) zugewandt ist, an dem Außenumfangsabschnitt der Membranelektroden-Anordnung (2) freiliegt, und
die Membranelektroden-Anordnung (2) mit Rahmen (1) des Weiteren eine Verbindungs-Schicht (14) aus einem Klebstoff oder einem Haftmittel zwischen dem Innenumfangsabschnitt (1 C) des Rahmens (1) und der freiliegenden Seite der Elektrolytmembran (11) umfasst.

5. Membranelektroden-Anordnung (2) mit Rahmen (1) nach Anspruch 4,
wobei der Außenumfangsabschnitt der Membranelektroden-Anordnung (2) ein Austauschloch (13C) durch die Elektrolytmembran (11) hindurch zu der anderen der paarigen Elektroden-Schichten (12, 13) umfasst, und
eine Verankerung (14A) aus dem gleichen Material wie dem der Verbindungsschicht (14) in dem Austauschloch (13C) integral mit der Verbindungsschicht (14) ausgebildet ist.

6. Brennstoffzellen-Einzelzelle (C), die die Membranelektroden-Anordnung (2) mit Rahmen (1) nach einem der Ansprüche 1 bis 5, sowie ein Paar Separatoren (3, 4) umfasst, die die Membranelektroden-Anordnung (2) mit Rahmen (1) einschließen.

7. Brennstoffzellen-Einzelzelle (C) nach Anspruch 6, die des Weiteren umfasst:
ein Abdichtungselement (S), das zwischen dem Rahmen (1) und jedem der paarigen Separatoren (3, 4) in einem Teil außerhalb des Absatzes (1 B) so angeordnet ist, dass es den Rahmen (1) luftdicht mit jedem der paarigen Separatoren (3, 4) verbindet,
wobei der Rahmen (1) Vorsprünge (1Q, 1 R) umfasst, die in einem Teil innerhalb des Abdichtungselementes (11) so angeordnet sind, dass sie an jedem der paarigen Separatoren (3, 4) anliegen.

8. Brennstoffzellen-Einzelzelle (C) nach Anspruch 7, wobei der Rahmen (1) des Weiteren Vorsprünge (1Q, 1R) umfasst, die in einem Teil außerhalb des Abdichtungselementes (11) so angeordnet sind, dass sie an jedem der paarigen Separatoren (3, 4) anliegen.

9. Brennstoffzellen-Stapel (FS), der eine übereinandergeschichtete Vielzahl der Brennstoffzellen-Einzelzellen (C) nach einem der Ansprüche 6 bis 8 umfasst.

## Revendications

1. Ensemble électrode à membrane (2) avec cadre (1), comprenant :
un ensemble électrode à membrane (2) dans lequel une membrane électrolytique (11) est maintenue entre une paire de couches formant électrode (12, 13) ; et
un cadre en résine (1) disposé autour de l'ensemble électrode à membrane (2),
où le cadre (1) comprend une ouverture (1A) dans laquelle l'ensemble électrode à membrane (2) est disposé, un décrochement (1B) qui est formé le long d'un bord de l'ouverture (1A) et qui présente une hauteur correspondant à une épaisseur du cadre (1), et une partie périphérique interne (1C) qui dévie vers un côté du cadre (1) dû au décrochement (1B) et qui s'étend dans l'ouverture (1A),
une partie périphérique externe de l'ensemble électrode à membrane (2) est jointe à la partie périphérique interne (1C) sur le côté opposé à un côté dévié,
**caractérisé en ce que**
le cadre (1) présente une épaisseur qui est supérieure au décrochement (1B) ou comprend une partie de renfort (1E, 1F, 1G) prévue sur au moins un côté du décrochement (1B).

2. Ensemble électrode à membrane (2) avec cadre (1) selon la revendication 1, dans lequel la couche formant électrode (12, 13) qui est localisée du même côté que le côté dévié de la partie périphérique interne (1C) est une couche formant électrode à combustible (12).

3. Ensemble électrode à membrane (2) avec cadre (1) selon la revendication 1 ou 2,
une couche de catalyseur (12A) de l'une de la paire des couches formant électrode (12, 13) est exposée dans la partie périphérique externe de l'ensemble électrode à membrane (2), et
l'ensemble électrode à membrane (2) avec un cadre (1) comprend en outre une couche de jonction (14) d'un adhésif ou d'un agent adhésif entre la partie périphérique interne (1C) du cadre (1) et la couche de catalyseur (12A) de l'une des couches formant électrode (12, 13).

4. Ensemble électrode à membrane (2) avec cadre (1) selon la revendication 1 ou 2,
dans lequel un côté de la membrane formant électrolyte (11) faisant face à l'une de la paire des couches formant électrode (12, 13) est exposé dans la partie périphérique externe de l'ensemble électrode à membrane (2), et
l'ensemble électrode à membrane (2) avec cadre (1) comprend en outre une couche de jonction (14) d'un adhésif ou d'un agent adhésif entre la partie périphérique interne (1C) du cadre (1) et le côté exposé de la membrane formant électrolyte (11).

5. Ensemble électrode à membrane (2) avec cadre (1) selon la revendication 4,
la partie périphérique externe de l'ensemble électrode à membrane (2) comprenant un trou de communication (13C) à travers la membrane électrolytique (11) vers l'autre de la paire des couches formant électrode (12, 13), et
un ancrage (14A) d'un même matériau que la couche de jonction (14) est formé dans le trou de communication (13C) de manière solidaire avec la couche de onction (14).

6. Pile unique de pile à combustible (C), comprenant : l'ensemble électrode à membrane (2) avec cadre (1) selon l'une quelconque des revendications 1 à 5 ; et une paire de séparateurs (3, 4) qui prend en sandwich l'ensemble électrode à membrane (2) avec cadre (1).

7. Pile unique de pile à combustible (C) selon la revendication 6, comprenant en outre :
un élément d'étanchéité (S) qui est disposé entre le cadre (1) et chacune de la paire de séparateurs (3, 4) dans une partie située à l'extérieur du décrochement (1B) afin de joindre de manière hermétique à l'air le cadre (1) à chacune de la paire de séparateurs (3, 4),
le cadre (1) comprenant des protubérances (1Q, 1R) qui sont disposées dans une partie située à l'intérieur de l'élément d'étanchéité (11) pour venir en butée sur chacune de la paire de séparateurs (3, 4).

8. Pile unique de pile à combustible (C) selon la revendication 7, le cadre (1) comprenant en outre des protubérances (1Q, 1R) qui sont disposées dans une partie extérieure à l'élément d'étanchéité (11) pour venir en butée sur chacun de la paire de séparateurs (3, 4).

9. Empilement de piles à combustible (FS), comprenant une pluralité empilée de piles uniques de piles à combustible (C) selon l'une quelconque des revendications 6 à 8.
